# EUROPÄISCHE PATENTANMELDUNG

(11) **EP 1 630 148 A2**
(43) Veröffentlichungstag der Anmeldung: **01.03.2006**
(21) Anmeldenummer: 05102708.4
(22) Anmeldetag: 06.04.2005
(51) Int. Cl.: C04B 35/26, B01D 71/02

(54) **Sauerstofftransportierende Oxidkeramiken**

(30) Priorität: 28.08.2004 EP 04020506
(71) Anmelder: Universität Hannover, 30167 Hannover (DE)
(72) Erfinder: Caro, Jürgen, D-13129 Berlijn (DE); Wang, Haihui, D-30159 Hannover (DE); Tablet, Cristina, D-30451 Hannover (DE); Grubert, Gerd Dr., D-22299 Hamburg (DE)
(74) Vertreter: Taruttis, Stefan Georg

(57) **Zusammenfassung**

Die vorliegende Erfindung bezieht sich auf Sauerstoff transportierende Oxidkeramiken, Verfahren zur Herstellung solcher Oxidkeramiken sowie deren Anwendung. Erfindungsgemäße Sauerstoff und Elektronen transportierende Oxidkeramiken weisen einen kontrolliertem Sauerstofffluß auch bei hohen Temperaturen auf. Diese Oxidkeramiken haben eine kubische Perowskitstruktur, deren B-Position teilweise durch zweiwertige Kationen mit konstanter Oxidationsstufe ersetzt sind und enthalten kein Kobalt.

## Beschreibung

Die vorliegende Erfindung bezieht sich auf Sauerstoff transportierende Oxidkeramiken, Verfahren zur Herstellung solcher Oxidkeramiken sowie deren Anwendung.

Insbesondere bezieht sich die Erfindung auf Sauerstoff transportierende Oxidkeramiken mit kontrolliertem Sauerstofffluß, die auch für Elektronen leitend sind. Erfindungsgemäße Keramiken haben eine kubische Perowskitstruktur, die von dem Mineral Perowskit Ca^{II}Ti^{IV}O₃ abgeleitet ist. Die Perowskitstruktur bezeichnet allgemein kristalline Oxide der Formel ABO₃, bei denen der Ionenradius von A größer als der von B ist.

Von solchen Oxidkeramiken ist bekannt, dass sie in der Form von Membranen in katalytischen Membranreaktoren dazu geeignet sind, selektiv Sauerstoffionen und Elektronen zu leiten und Sauerstoff aus sauerstoffhaltigen Gasen, beispielsweise Luft abzutrennen.

Es wird allgemein angenommen, dass der Transport von Sauerstoffionen durch Membranen mit Perowskitstruktur durch Gitterlücken des Perowskits ermöglicht wird, die zum Beispiel dadurch entstehen, dass Metallionen durch Ionen mit niedrigerer Valenz ersetzt werden. Sauerstoffanionen können durch diese Gitterlücken durch die keramische Membran hindurchtreten. Zur Wahrung der Elektroneutralität ist es erforderlich, dass für den Durchtritt eines Sauerstoffanions zwei Elektronen in Gegenrichtung durch die Membran wandern. Bei den erfindungsgemäßen Oxidkeramiken ist dies aufgrund der Elektronenleitfähigkeit gewährleistet. In besonderen Ausführungsformen kann die Elektronenleitung durch eine Membran mit einem Gehalt an erfindungsgemäßer Oxidkeramik jedoch durch eine zusätzliche Schicht, die für Elektronen undurchlässig ist, jedoch für Sauerstoffanionen permeabel ist, unterbrochen und außerhalb einer solchen Membran geführt werden.

### Stand der Technik

Aus der US 5 591 315 ist bekannt, Oxidkeramiken zu Sauerstoff leitenden Membranen zu verarbeiten. Die Leitung von Sauerstoffionen wird dabei auf die Perowskitstruktur der Mischmetalloxide zurückgeführt. Für die Eigenschaften der gleichzeitigen Elektronenleitung offenbart die US 5 591 315 ein einphasiges Material, bei dem die zusätzliche Eigenschaft der Elektronenleitfähigkeit durch Dotierung mit einem leitfähigen Metall oder Metalloxid erreicht wird, beispielsweise Kobalt. Alternativ dazu werden mehrphasige Membranen offenbart, bei denen die Leitung der Sauerstoffionen in einem Bestandteil der Membran ablaufen kann, während die Elektronenleitfähigkeit von einem anderen Bestandteil bereitgestellt wird. Als mögliche Bestandteile für die B-Position eines Perowskits mit der Struktur ABO₃, der Teil einer zweiphasigen Oxidkeramik sein kann, wird allgemein auf die erste Reihe von Übergangsmetallen verwiesen, nämlich Sc, Ti, V, Cr, Mn, Fe, Co, Ni, Cu, Zn. Die näher charakterisierten Perowskite enthalten von diesen Übergangsmetallen immer Kobalt und/oder Eisen.

Die US 6 214 757 offenbart einphasige dotierte Oxidkeramiken mit Perowskitstruktur, die sowohl Sauerstoffionen als auch Elektronen leiten. Darin wird die US 5 356 728 damit zitiert, dass Mischmetalloxid-Keramiken mit Sauerstoff und Elektronen leitenden Eigenschaften Perowskitstruktur haben können und Metalle mit Atomzahlen von 4 (Be), 12 (Mg), 20 bis 31 (Ca, Sc, Ti, V, Cr, Mn, Fe, Co, Ni, Cu, Zn, Ga), 38 bis 41 (Sr, Y, Zr, Nb) und 56 bis 71 (Ba, La, Ce, Pr, Nd, Pm, Sm, Eu, Gd, Tb, Dy, Ho, Er, Tm, Yb, Lu) enthalten können. Die als Beispiele zitierten Summenformeln weisen jeweils Kobalt und Eisen als Bestandteile aus.

Für die technische Anwendung werden Membranmaterialien bevorzugt, die eine hohe Leitfähigkeit für Sauerstoffionen, d.h. eine hohe Permeanz für Sauerstoff aufweisen. Die Entwicklung von Membrankeramiken der letzten Jahrzehnte basiert darauf, dass die höchsten Sauerstoffpermeanzen für Oxidkeramiken mit Perowskitstruktur gefunden wurden, wenn das Element Kobalt in der B-Position der Perowskitstruktur vorliegt. Zwar ermöglicht der Gehalt an Kobalt in der Form von Kobalt(II)-oxid als B-Ion des Perowskits eine hohe Sauerstoffpermeanz, bringt jedoch den Nachteil mit sich, dass das Kobalt(II)-oxid in reduzierender Atmosphäre relativ leicht zu metallischem Kobalt reduziert wird, wodurch die Membran zumindest teilweise zerstört wird. Diese Reduktion des Kobalt(II)-oxids zu metallischem Kobalt tritt insbesondere bei erhöhten Prozesstemperaturen auf und hat zur Folge, dass sich die Sauerstoffpermeanz erhöht. Diese Steigerung der Sauerstoflpermeanz führt bei exothermen Reaktionen auf der Permeatseite der Membran zu einer erhöhten Reaktionsrate und dadurch wiederum zur verstärken Freisetzung von Wärme, d.h. wiederum zu einer Temperaturerhöhung. Dies kann dazu führen, dass ein Reaktor durchgeht bzw. durchbrennt, wobei die Membraneigenschaft der selektiven Sauerstoffpermeanz zerstört wird.

Überdies sind sowohl Kobaltoxid als auch das metallische Kobalt bei einer Betriebstemperatur der Membranen zwischen 800 und 900 °C vergleichsweise flüchtig.

Zur Vermeidung dieser Nachteile von Kobalt (II) oder metallischem Kobalt in den Membranen mit Perowskitstruktur wurde versucht, kobaltfreie Perowskitmaterialien zu entwickeln. So offenbart die US 6 214 757 B1 La₁₋ₓSrₓGaYFe_{1-y}O₃-_{δ}. Dieses Material ist jedoch aufgrund seiner geringen Sauerstoffpermeanz für den technischen Einsatz nachteilig, überdies führt der Einsatz von Gallium zu hohen Materialkosten. Zhu et al., *Chem. Commun.,* 1130 (2004) offenbaren ein weiteres kobaltfreies, Sauerstoffionen leitendes Material als BaCeₓFe₁₋ₓO₃-_{δ}. Dieses Material ist jedoch zweiphasig, so dass nur die eisenreiche Phase Sauerstoffionen transportieren kann und in der Folge der Sauerstoffstrom insgesamt gering ist. Die US 2002/0 173 422 A1 beschreibt eine kobaltfreie Perowskitstruktur ABO₃ mit der Zusammensetzung Sr_{0,5}Ca_{0,5}MnO₃-_{δ}, bei der das Ion in der A-Position variiert werden kann. Dieses Material zeigt jedoch nur geringe Sauerstoffpermeanzen.

### Aufgabe der Erfindung

Angesichts der vorgenannten Nachteile bekannter Membranen aus Oxidkeramiken mit Perowskitstruktur stellt sich der vorliegenden Erfindung die Aufgabe, eine Oxidkeramik mit Perowskitstruktur bereitzustellen, die die Nachteile des Standes der Technik vermeidet. Hier stellt sich insbesondere die Aufgabe, für Membranen geeignete Oxidkeramiken bereitzustellen, die eine hohe Sauerstoffpermeanz aufweisen, vorzugsweise auch bei hohen Temperaturen, beispielsweise von oberhalb von 900 °C. Die Stabilität bei hohen Temperaturen soll sich vorzugsweise einerseits in der Beständigkeit der Struktur und Beschaffenheit des Membranmaterials zeigen, andererseits in der Eigenschaft der Oxidkeramik, nur geringe oder unwesentliche Veränderungen der Sauerstoffpermeanz in Abhängigkeit von der Temperatur aufzuweisen.

### Allgemeine Beschreibung der Erfindung

Die vorliegende Erfindung stellt Oxidkeramiken mit Perowskitstruktur bereit, die zur Herstellung von Membranen geeignet sind, die die vorgenannten Aufgaben der Erfindung erfüllen.

Insbesondere stellt die vorliegende Erfindung Oxidkeramiken mit Perowskitstruktur bereit, die in Form von Membranen auch bei Temperaturen oberhalb von 900 °C, beispielsweise in einem Bereich von 950 °C bis 1175 °C, keine wesentlichen Strukturveränderungen und keine wesentlichen Änderungen ihrer Zusammensetzung aufweist. Die erfindungsgemäße Oxidkeramik mit Perowskitstruktur, bzw. eine Membran mit einem Anteil davon oder vollständig daraus, ermöglicht Sauerstoffpermeanzen, die für die technische Anwendung in Membranreaktoren ausreichend hoch sind. Weiterhin ist die Rate der Sauerstoffpermeation in Abhängigkeit von der Temperatur bei Membranen vollständig aus oder mit einem Gehalt an erfindungsgemäßer Oxidkeramik mit Perowskitstruktur im wesentlichen konstant, d.h. auch bei einem Temperaturanstieg steigt die Sauerstoffpermeanz nicht wesentlich an.

Die erfindungsgemäße Oxidkeramik enthält kein Kobalt und hat die allgemeine Struktur ΛB(B')O₃, wobei das Ion B' ein zweiwertiges Kation mit stabiler und niedriger Oxidationsstufe ist, B ein Elektronen leitendes Material ist, beispielsweise ausgewählt unter Fe³⁺ und Fe⁴⁺, Ti³⁺, Ti⁴⁺, Ce³⁺, Ce⁴⁺ Mn³⁺, Mn⁴⁺, Nd³⁺, Nd⁴⁺, Gd³⁺, Gd⁴⁺, Sm³⁺, Sm⁴⁺, Dy³⁺ und/oder Dy⁴⁺, vorzugsweise Eisen, wobei deren Anteil als Summe von B und B' 0,9 bis 1,1, vorzugsweise 1 beträgt. Der Anteil von B' an der Summe von B und B' beträgt 0,05 bis 0,95, vorzugsweise 0,1 bis 0,9, bevorzugter 0,15 bis 0,85, besonders bevorzugt 0,8. Metallionen für B' sind ausgewählt unter Sn²⁺, Ni²⁺, Cu²⁺, Cd²⁺ und/oder Pd²⁺, vorzugsweise Zn²⁺ und Mischungen dieser.

Metalle für A schließen die Lanthaniden (La, Ce, Pr, Nd, Pm, Sm, Eo, Gd, Tb, Dy, Ho, Er, Tm, Yb, Lu, Yttrium) und Erdalkalimetalle, insbesondere Magnesium, Calcium, Strontium und Barium, jeweils einzeln oder in Kombination ein. Vorzugsweise enthält die Perowskitstruktur der erfindungsgemäßen Oxidkeramik an der A-Position eine Mischung aus Barium und Strontium, wobei deren Anteil als Summe 0,9 bis 1,1, vorzugsweise 1 beträgt. Die bevorzugte Ausführungsform der erfindungsgemäßen Oxidkeramik ist BaₓSr₁₋ₓFe_{y}Zn_{1-y}O_{3-δ}, wobei x zwischen 0,1 und 0,9 liegt, vorzugsweise 0,5 ist, y zwischen 0,01 und 0,99 liegt, vorzugsweise zwischen 0,1 und 0,9, besonders bevorzugt zwischen 0,75 und 0,85, und δ die Sauerstoff-Nichtstöchiometrie bezeichnet. Bevorzugter hat die erfindungsgemäße Oxidkeramik die Summenformel Ba_{0,4-0,6}Sr_{0,4-0,6}Fe_{0,7-0,9}Zn_{0,1-0,3}O_{3-δ}. Am bevorzugtesten hat die erfindungsgemäße Oxidkeramik mit Perowskitstruktur die Formel BaₓSr₁₋ₓFe_{0,8}Zn_{0,2}O₃-_{δ}. Bevorzugterweise ist die Sauerstoff-Nichtstöchiometrie δ temperaturunabhängig.

Es wird angenommen, dass insbesondere die Verwendung von Zink²⁺ als B'- Kation der erfindungsgemäßen Oxidkeramik eine hohe Stabilität verleiht. Denn durch die niedrige und stabile Oxidationsstufe wird eine nur geringe und konstante Sauerstoff-Nichtstöchiometrie erzeugt, die wiederum als Ursache für die hohe Materialstabilität der erfindungsgemäßen Oxidkeramik angesehen wird.

Die besonderen Eigenschaften der erfindungsgemäßen Oxidkeramiken mit Perowskitstruktur lassen sich auch anhand der Analyse durch Transmissionselektronenmikroskopie, Rasterelektronenmikroskopie und Differential-Thermoanalyse nachweisen.

Die Herstellung der erfindungsgemäßen Oxidkeramiken kann in Anlehnung an bekannte Verfahren, beispielsweise durch Herstellung aus Oxiden erreicht werden, die die Schritte der Herstellung eines Perowskitpulvers mit der erfindungsgemäßen Zusammensetzung, Formen der Mischung zu einer gewünschten Form und Erwärmung der geformten Mischung auf eine ausreichende Temperatur enthält, um eine dichte Feststoffmembran mit Sauerstoffionen und Elektronen leitenden Eigenschaften zu erhalten. Die Erwärmung erfolgt üblicherweise auf eine Temperatur oberhalb von 500 °C, vorzugsweise oberhalb von 900 bis 1000 °C.

Alternativ kann die erfindungsgemäße Oxidkeramik durch thermische Zersetzung von Nitrat-und/oder Acetatsalzen der Bestandteile der erfindungsgemäßen Perowskitstruktur hergestellt werden. Dieses Verfahren enthält die Schritte des Lösens der Nitrat- und/oder Acetatsalze der erwünschten Elemente in einem Lösungsmittel, beispielsweise Wasser, Entfernung des Lösungsmittels durch Erwärmen, Erhitzen des erhaltenen Feststoffs auf die Zersetzungstemperatur der Nitrat- und/oder Acetatsalze, Formung der erhaltenen Mischung und Erwärmung, um eine dichte Feststoffmembran mit Elektronen und Sauerstoffionen leitenden Eigenschaften zu erhalten. Für das Entfernen von Lösungsmittel und das Erreichen der Zersetzungstemperatur sind allgemein etwa 500 °C ausreichend, die Temperatur zur Bildung der Feststoffmembran beträgt oberhalb 900 °C, vorzugsweise oberhalb 1000 °C.

Weiter alternativ kann die erfindungsgemäße Oxidkeramik mit Perowskitstruktur nach dem Citronensäure-Verfahren hergestellt werden, das die Schritte der Mischung der Nitrat-und/oder Acetatsalze der Bestandteile der erfindungsgemäßen Perowskitstruktur in einem polaren Lösungsmittel, das Citronensäure enthält, beispielsweise in wässriger Citronensäurelösung, Erwärmung der Mischung zur Bildung eines Feststoffs, Formung des Feststoffs in eine erwünschte Form und Erhitzen der geformten Mischung auf eine ausreichende Temperatur enthält, um eine dichte Feststoffmembran mit Sauerstoffionen und Elektronen leitenden Eigenschaften zu erhalten. Die Temperaturen für die einzelnen Schritte entsprechen denen des vorgenannten Zersetzungsverfahrens.

Für das Formen der Mischung in eine gewünschte Form können Bindemittel zugegeben werden, beispielsweise Wachse oder Paraffine, die in einem geeigneten Lösungsmittel dispergiert oder gelöst sind.

Das Formen kann durch Aufbringen von hohem Druck, Extrudieren oder Spinnen erfolgen.

Membranen aus erfindungsgemäßer Oxidkeramik mit Perowskitstruktur sind in Verfahren anwendbar, die die selektive Leitung von Sauerstoffionen durch die Perowskitstruktur einsetzen. Dies betrifft z.B. die Zerlegung von Luft bzw. die Abtrennung von Sauerstoff aus Luft bei hoher Temperatur, bei der eine Seite der Membran in Kontakt mit Luft oder einem anderen sauerstoffhaltigen Gas steht, während auf der gegenüberliegenden (Permeat-) Seite der Membran ein sehr niedriger Partialdruck für Sauerstoff herrscht, beispielsweise erzeugt durch Abpumpen von Sauerstoff oder Spülen mit Inertgas, beispielsweise Kohlendioxid.

In einer weiteren Anwendung kann die erfindungsgemäße Oxidkeramik in Membranform zur Reduktion sauerstoffhaltiger Gase durch Abtrennung von deren Sauerstoff dienen, beispielsweise aus gasförmigem Wasser, Stickstoffoxiden (NOₓ) und/oder Schwefeldioxid. Die Oberfläche der Membran, die mit einem der vorgenannten oder einem anderen sauerstoffhaltigen Gas in Kontakt kommt, wird im Rahmen dieser Offenbarung als Luftseite bezeichnet, die gegenüberliegende Seite, auf der der aus dem sauerstoffhaltigen Gas abgetrennte Sauerstoff austritt, als Permeatseite. Dabei wird der Sauerstoff aus dem sauerstoffhaltigen Gas mittels der Permeation durch die Membran auf die Permeatseite entfernt.

Die erfindungsgemäße Oxidkeramik kann auch in Oxidationsreaktionen eingesetzt werden, die den selektiven Durchtritt von Sauerstoffionen durch das Membranmaterial einsetzen, beispielsweise bei der oxidativen Kopplung von Alkanen oder zur Erzeugung von Synthesegas aus Methan oder bei der partiellen Oxidation von Alkanen zu ungesättigten Verbindungen.

In einer weiteren Ausführungsform der Erfindung kann die erfindungsgemäße Oxidkeramik mit Perowskitstruktur Bestandteil einer Membran sein, die keine Leitfähigkeit mehr für Elektronen besitzt, jedoch für Sauerstoffionen leitend ist. Eine solche Membran hat beispielsweise einen dreischichtigen Aufbau, bei dem die außen liegenden Schichten einen Gehalt an erfindungsgemäßer Oxidkeramik aufweisen oder daraus bestehen, und die Zwischenschicht keine Elektronenleitung zuläßt. Eine solche, für Elektronen isolierende Membran-Zwischenschicht kann beispielsweise aus Yttrium-stabilisiertem Zirkoniumoxid (YSZ) bestehen, auf das beidseitig die erfindungsgemäße Oxidkeramik als Dünnschicht, beispielsweise mit einer Schichtdicke zwischen 1 µm und 1 mm, aufgebracht ist.

Durch elektrisches Kontaktieren der beiden Oxidkeramik-Schichten, die durch die Zwischenschicht elektrisch voneinander isoliert sind, läßt sich der Elektronenfluß nach Art einer Brennstoffzelle außerhalb der Membran führen und nutzen. Hingegen läßt dieser Membranaufbau in drei Schichten den Fluß der Sauerstoffionen durch die beiden erfindungsgemäßen Oxidkeramikschichten und die dazwischen liegende elektrische Isolationsschicht von der Luftseite, die mit einem sauerstoffhaltigen Gas in Kontakt steht, zur Permeatseite zu, auf der eine Reaktion, wie beispielsweise die vollständige oder partielle Oxidation eines Kohlenwasserstoffs stattfinden kann. Eine solche Partialoxidation ist beispielsweise die Oxidation von Methan zu Synthesegas und/oder die Oxidation von Wasserstoffgas oder einem anderen gasförmigen Reduktionsmittel.

### Genaue Beschreibung der Erfindung

Die Herstellung und Charakterisierung erfindungsgemäßer Oxidkeramiken mit Perowskitstruktur und deren Formung wird nachfolgend anhand eines bevorzugten Perowskits (Ba_{0,5}Sr_{0,5}Fe_{0,8}Zn_{0,2}O₃-_{δ}) beschrieben, gelten jedoch ebenfalls für die anderen erfindungsgemäßen Materialien.

Zur Herstellung des erfindungsgemäßen Perowskitmaterials kann beispielsweise von einem Eisen-basierten Perowskit der Zusammensetzung ΛFeO₃-_{δ} ausgegangen werden. Dabei werden die Fe⁴⁺-Ionen auf der B-Position der Perowskitstruktur zumindest teilweise durch ein zweiwertiges Kation mit stabiler Oxidationsstufe ersetzt, erfindungsgemäß bevorzugt durch Zink²⁺. Verfahrenstechnisch kann der Einbau von Zink dadurch erreicht werden, dass von dem Grundmaterial Sr^{II}Fe^{IV}O_{3-δ} mit der Struktur ABO₃ ausgegangen wird, bei diesem gleichzeitig Barium²⁺-Kationen auf die A-Plätze gebracht werden und dort das Sr²⁺ zumindest teilweise ersetzen und Zink²⁺-Ionen durch ein kombiniertes Citrat-EDTA-Verfahren auf der Basis von Metallnitraten auf die B-Position gebracht werden und dort das Fe⁴⁺ zumindest teilweise ersetzen.

Es wird von den Erfindern vermutet, dass die Barium²⁺-Kationen auf den A-Plätzen dazu führen, dass die Sauerstoffpermeanz erhöht wird.

### Charakterisierung durch hoch auflösende Transmissionselektronenmikroskopie

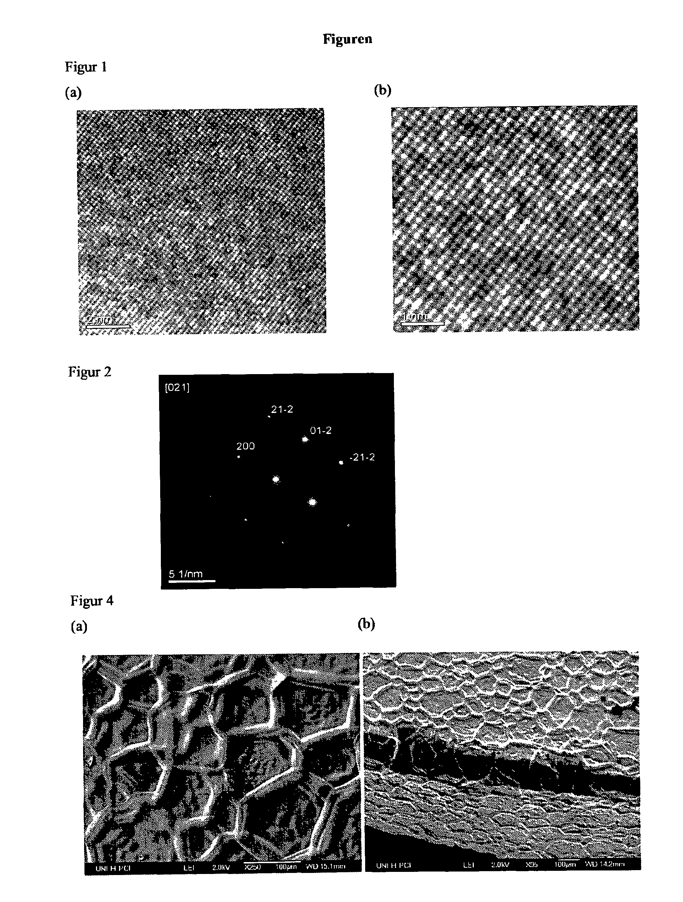

Ein bevorzugtes erfindungsgemäßes Perowskitmaterial mit der Summenformel Ba_{0,5}Sr_{0,5}Fe_{0,8}Zn_{0,2}O₃-_{δ}, herstellbar nach Beispiel 1, wurde in der hoch auflösenden Transmissionselektronenmikroskopie (HR-TEM) untersucht. Figur 1 zeigt die HR-TEM-Aufnahme in verschiedenen Auflösungen, unter (a) in Draufsicht und (b) in Seitenansicht aus 021-Richtung gesehen. Die periodischen Netzebenen der Kristallstruktur sind sichtbar. Das entsprechende Feinbereichsbeugungsdiagramm (SAED), in Figur 2 als Aufnahme entlang der 021-Zonenachse dargestellt, indiziert eine kubische Elementarzelle mit den folgenden Netzebenen-Abständen: d(200) = 0,206 nm, d(01-2) = 0,176 nm und d(21-2) = 0,135. Diese Daten entsprechen einer kubischen Elementarzelle mit einer Gitterkonstanten von 0,412 nm.

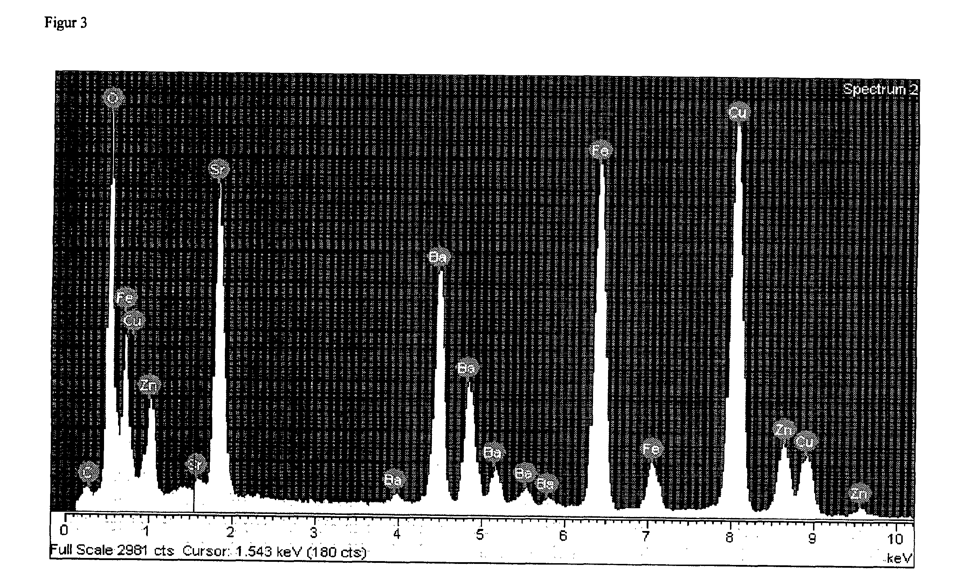

Das in Figur 3 dargestellte Ergebnis der energiedispersiven Röntgenspektroskopie (ED-XS) eines Kristalles des pulverförmigen Perowskits entlang [021] zeigt die Anwesenheit der Elemente Barium, Strontium, Eisen, Zink und Sauerstoff; das Kupfer-Signal stammt von dem TEM-Probenhalter. Die quantitative Analyse mittels der Cliff-Lorimer-Auswertetechnik ergab das Kationenverhältnis von Ba : Sr : Zn : Fe von 5 : 5 : 2 : 8, was die Stöchiometrie des Perowskits zu Ba_{0,5}Sr_{0,5}Fe_{0,8}Zn_{0,2}O₃-_{δ} exakt bestätigt.

### Charakterisierung durch Feldemissions-Rasterelektronenmikroskopie (REM)

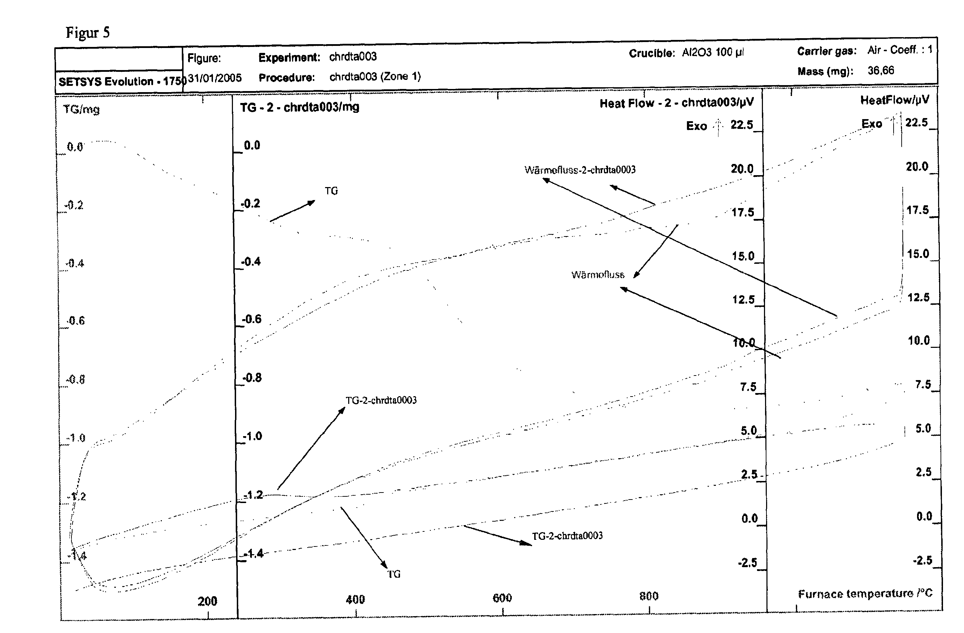

Für die Analyse mittels Feldemissions-REM (JEOL LSM-6700F) wurde eine Membran aus erfindungsgemäßem Perowskit durch Sintern bei 1175 °C über 10 Stunden hergestellt. Diese gesinterte Perowskitmembran besitzt mit 96% einen vergleichsweise hohen Wert der theoretisch möglichen Dichte, die sich rechnerisch aus der Größe der Elementarzelle ergibt. Die REM-Aufnahmen sind in Figur 4 wiedergegeben und zeigen, dass die Perowskitkörner dicht verwachsen sind und klare Korngrenzen aufweisen.

In Kombination mit den Feinbereichsbeugungsdiagrammen (SAED) an verschiedenen Stellen der Körner folgt, dass diese Körner Einkristalle darstellen und daher die Korngrenzen Kristallgrenzen sind.

Bei einer Bestimmung der Dichtheit der derselben Membran, wie sie für die REM-Aufnahmen eingesetzt wurde, zeigt sich bei einem Differenzdruck von 5 bar über die Membran kein messbarer Stickstofffluß, d.h. der Stickstofffluß war kleiner als 10⁻⁵ mL/ cm²/min.

### Charakterisierung durch Thermogravimetrie und Differentialscanningkalorimetrie

Bei der Charakterisierung erfindungsgemäßen Perowskitmaterials mittels Thermogravimetrie (TG) wurde gefunden, dass im Bereich zwischen Raumtemperatur bis 320 °C ein Gewichtsverlust von etwa 0,5% auftritt. Dieser Gewichtsverlust auf die Desorption von Wasser und Kohlendioxid von der Materialoberfläche zurückgehen. Im Temperaturbereich zwischen 440 °C und 800 °C wird der beobachtete Gewichtsverlust von etwa 2% dem Ausbau von Sauerstoff und der Schaffung von Sauerstofffehlstellen im Perowskitmaterial zugeschrieben. Oberhalb von 800 °C tritt kein weiterer Gewichtsverlust auf. Zur Messung wurde pulverförmiges Perowskitmaterial in einer Heliumatmosphäre bei einer Aufheizrate von 5 °C/min eingesetzt. Die Messwerte sind in Figur 5 dargestellt.

Bei der Differentialscanningkalorimetrie (DSK), deren Ergebnis ebenfalls in Figur 5 dargestellt ist, wurden im Bereich zwischen Raumtemperatur und 1150 °C keine endothermen oder exothermen Spitzenwerte beobachtet. Dies zeigt, dass sowohl beim Aufheizen als auch beim Abkühlen keine Phasentransformationen erfolgen, was den Schluss zulässt, dass die kubische Struktur des Perowskitmaterials erhalten bleibt. Dieselbe Beobachtung wurde bei der *in situ* Röntgendiffraktrometrie gemacht.

### Kurze Beschreibung der Figuren:

- Figur 1 zeigt unter (a) und (b) HR-TEM-Aufnahmen eines Kristalles des pulverförmigen Perowskitmaterials aus 021-Richtung bei unterschiedlicher Vergrößerung.
- Figur 2 zeigt ein Feinbereichsbeugungsdiagramm einer Fläche von 100 nm x 100 nm eines Kristalls des pulverförmigen Perowskitmaterials entlang 021.
- Figur 3 die Aufnahme der EDXS eines Kristalles des pulverförmigen Perowskitmaterials.
- Figur 4 zeigt unter a) in Draufsicht und b) in Seitenansicht REM-Aufnahmen der erfindungsgemäßen Perowskitmembran im Feldemmissions-Rasterelektronenmikroskop.
- Figur 5 zeigt den Verlauf der Messung der Thermogravimetrie und der Differentialscanningkalorimetrie pulverförmigen Perowskitmaterials unter Helium
- Figur 6 zeigt die Messergebnisse der partiellen Methanoxidation.
- Figur 7 zeigt ein Röntgendiffraktogramm eines erfindungsgemäßen Perowskitmaterials (Ba_{0,5}Sr_{0,5}Fe_{0,8}Zn_{0,2}O₃-_{δ}) unter a) als Pulver, das bei 950 °C geglüht wurde und unter b) als Membran-Tablette, bei 1175 °C geglüht.
- Figur 8 zeigt eine schematische Darstellung eines Membranreaktors zur Abtrennung von Sauerstoff aus Luft bei hohen Temperaturen.

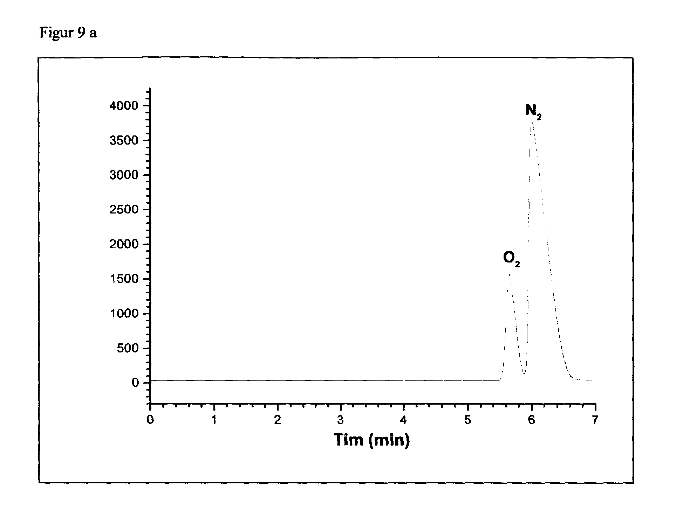

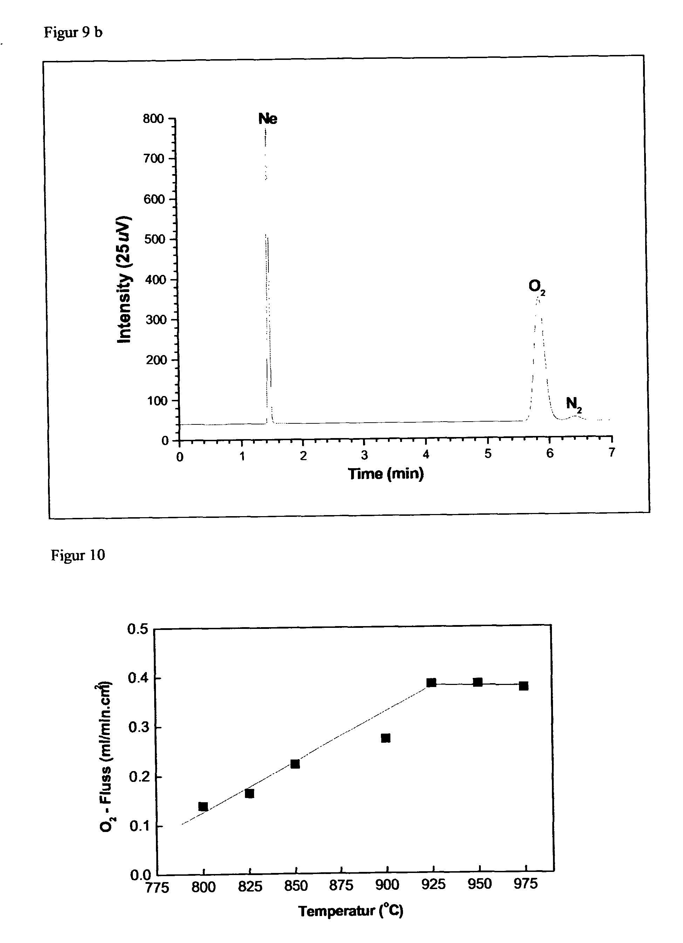

- Figur 9 zeigt Gaschromatogramme von a) dem Eingangsgas Luft und b) des an Sauerstoff reichen Permeats als Ergebnis der Abtrennung von Sauerstoff aus Luft.
- Figur 10 zeigt die Sauerstoffpermeanz eines erfindungsgemäßen Perowskitmaterials in Abhängigkeit von der Temperatur.

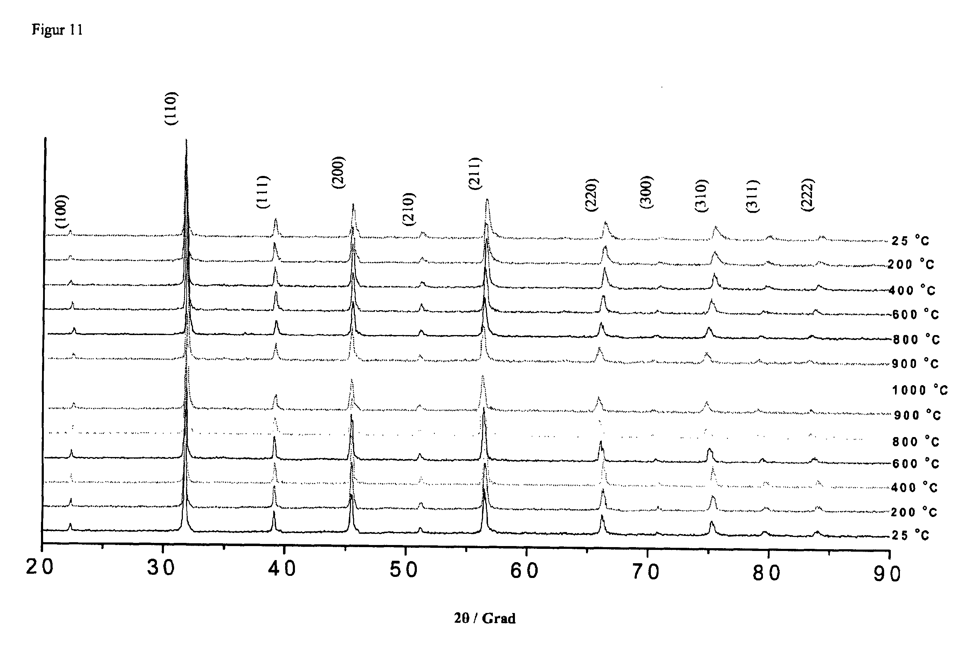

- Figur 11 zeigt Röntgendiffraktogramme eines erfindungsgemäßen Perowskitmaterials bei unterschiedlichen Temperaturen.

Die Erfindung wird nun anhand von Beispielen mit Bezug auf die Figuren genauer erläutert.

### Beispiel 1: Herstellung einer Oxidkeramik mit Perowskitstruktur

Unter Rühren werden 5,23 g festes Ba(NO₃)₂, 63,43 mL 0,473 M Sr(N0₃)₂, 34,47 mL 1,1605 M Fc(N0₃)₂ als wässrige Lösungen in ein Becherglas gegeben, bis sich das feste Bariumnitrat auflöst. Dieser Lösung werden 29,77 mL einer 0,03359 M Zn(N0₃)₂ wässrigen Lösung, 29,2 g EDTA (fest) und 31,52 g Citronensäure (fest) sowie 180 mL 25% NH₄OH zugegeben. Die Lösung wird unter Rühren auf 150 °C erhitzt. Es fällt ein gemischtes Metallhydroxid /Metalloxid-Gel aus. Überschüssige Flüssigkeit wird bei 350 °C über 8 Stunden abgedampft, das feste Produkt, bestehend aus einem Gemisch der Metallhydroxide und Metalloxide, wird anschließend bei 950 °C über 10 Stunden geglüht. Das anfallende Pulver wird anschließend bei Raumtemperatur isostatisch bei einem Preßdruck von 120 bar in einer hydraulischen Presse zu einer Tablette von 1,5 mm Dicke gepresst, anschließend über 10 Stunden bei 1175 °C in Luft gesintert, wobei die Aufheizrate 3 °C / Minute und die Abkühlrate 5 °C / Minute beträgt.

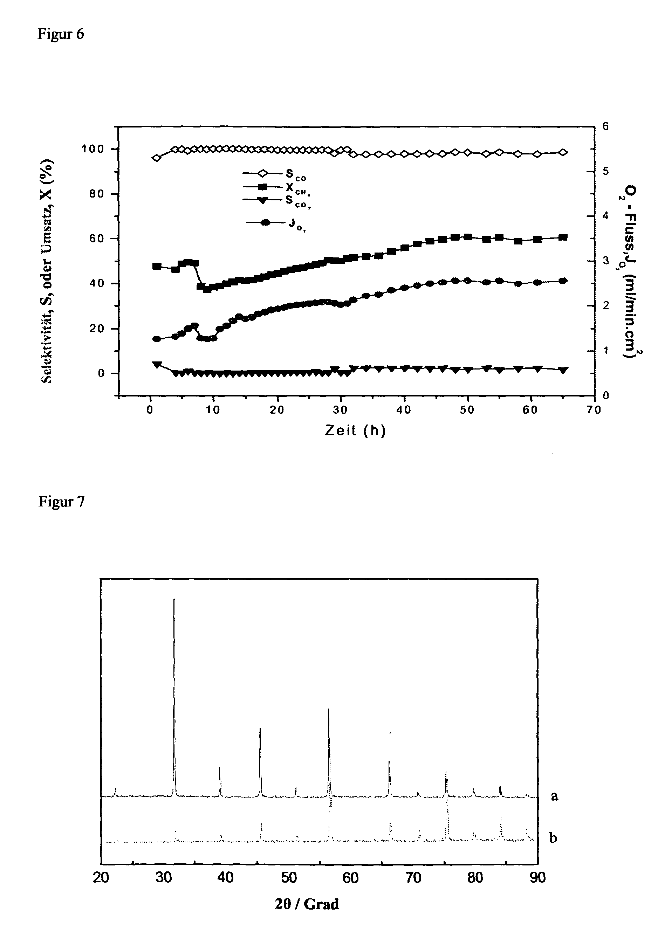

Das Röntgendiffraktogramm, in Figur 7 dargestellt, zeigt für Ba_{0,5}Sr_{0,8}Fe_{0,8}Zn_{0,2}O₃-_{δ} die Perowskitstruktur sowohl für das bei 950 °C geglühte Pulver, als auch für die bei 1175 °C gesinterte Tablette mit dem kubischem Strukturtyp ABO₃. Die Gitterkonstante beträgt a = 0,412 nm. Dieser Wert konnte durch Elektronenbeugung am Elektronenmikroskop bestätigt werden.

### Beispiel 2: Abtrennung von Sauerstoff aus Luft

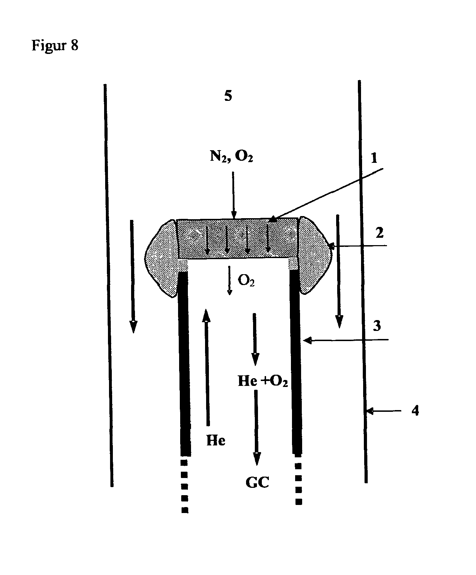

Als Beispiel für das erfindungsgemäße Membranmaterial wird die in Beispiel 1 hergestellte gepreßte und gesinterte Tablette in eine Hochtemperatur-Permeationsapparatur eingeklemmt. Diese Permeationsapparatur ist in Figur 8 schematisch dargestellt und zeigt die Membran 1, die mittels einer Dichtung 2 gasdicht das Innenvolumen eines Quarzrohrs 3 abschließt. Das Innenvolumen des Quarzrohrs 3 grenzt an die Oberfläche der Membran 1 an, durch die Sauerstoffionen selektiv von der gegenüberliegenden sogenannten Luftseite 5 hindurchtreten.

Das Innenvolumen des Quarzrohrs 3 wird mit Helium und/oder Neongas, alternativ Kohlendioxid gespült, um den Partialdruck des hindurchgetretenen Sauerstoffs niedrig zu halten. Der Mantel 4 umschließt die Luftseite 5, auf der ein sauerstofthaltiges Gas, hier Luft, mit der Membran 1 in Kontakt kommt. Für die Messung der Sauerstoffpermeation durch die Membran 1 wird das Spülgas vom Innenvolumen des Quarzrohrs 3 zur Gaschromatographie geführt. Als Material für den Mantel 4 kann ebenfalls Quarzrohr verwendet werden. Der Gaschromatograph (Agilent 6890) wurde ebenfalls zur Analyse des sauerstoffhaltigen Gases auf der Luftseite eingesetzt. Die Abtrennung des Sauerstoffs erfolgte bei Temperaturen von 700 bis 1000 °C.

In Figur 3 ist ein typisches Gaschromatogramm der eingesetzten Luft auf der Luftseite bei (a) und bei (b)der Gasmischung auf der Permeatseite der Membran, d.h. im Innenvolumen des Quarzrohrs 3, bei einer Reaktionstemperatur von 925 °C gezeigt. Auf der Luftseite wird etwa 78% Stickstoff gefunden, auf der Permeatseite nahezu reiner Sauerstoff.

### Beispiel 3: Konstanz der Sauerstoffpermeanz bei hoher Temperatur

Anhand der Abtrennung von Sauerstoff aus Luft gemäß Beispiel 2 wurde experimentell geprüft, wie sich die Sauerstoffpermeanz des erfindungsgemäßen Membranmaterials Ba_{0,5}Sr_{0,5}Fe_{0,8}Zn_{0,2}O₃-_{δ} in Abhängigkeit von der Reaktionstemperatur verhält. Die Fließrate von Luft betrug 150 mL/min, der des Spülgases He/ Ne 30 mL/min, die Membrandicke 1,5 mm. Die Ergebnisse sind in Figur 4 gezeigt und belegen die hohen Raten der Sauerstoffpermeanz für das erfindungsgemäße Perowskitmaterial. Im Vergleich zu Materialien nach dem Stand der Technik, nämlich La_{0,15}Sr_{0,85}Ga_{0,3}Fe_{0,7}O₃-_{δ} (0,09 mL/(min x cm²)) und La_{0,6}Sr_{0,4}Co_{0,2}Fe_{0,8}O₃-_{δ} (0,25 mL/(min x cm²))(Zhu et al., *Chem. Commun.,* 1130 (2004) zeigt das erfindungsgemäße Membranmaterial bei 925 °C mit 0,38 mL/(min x cm²) einen deutlich höheren Sauerstofffluß.

Ebenfalls wird hier der besondere Vorteil der erfindungsgemäßen Membranmaterialien darin deutlich, dass die Sauerstoffpermeanz ab einer bestimmten Temperatur im wesentlichen konstant bleibt. Ab einer Temperatur von ca. 925 °C nimmt der Sauerstofffluß daher nicht mehr wesentlich zu, was diese Oxidkeramik insbesondere für eine Anwendung als Membrankeramik für exotherme Reaktionen auf der Permeatseite, beispielsweise Oxidationsreaktionen, geeignet macht. Die Zunahme des Sauerstoffflusses oberhalb 925 °C liegt vorzugsweise unter 5%, bevorzugter unter 2%. Daher reduziert bzw. vermeidet die erfindungsgemäße Oxidkeramik das im Zusammenhang mit kobalthaltigen Perowskitmaterialien diskutierte unerwünschte Durchgehen im Reaktor bei Temperaturschwankungen, beispielsweise bei Oxidationsreaktionen auf der Permeatseite.

### Beispiel 4: Stabilität der erfindungsgemäßen Perowskitstruktur

Die Stabilität der erfindungsgemäßen Oxidkeramik mit Perowskitstruktur wurde am Beispiel von Ba_{0,5}Sr_{0,5}Fe_{0,8}Zn_{0,2}O₃-_{δ} in einer Hochtemperatur-Durchflußzelle mittels Röntgendiffraktrometrie untersucht. Die Haltezeiten bei der jeweils angegebenen Temperatur betrugen 70 min, die Aufheizrate und Kühlrate betrug jeweils 5 K/min. Die Ergebnisse sind in Figur 5 dargestellt und zeigen, dass die Perowskitstruktur mindestens bis zu einer Temperatur von 1000 °C bei Anwesenheit von Luft erhalten bleibt. Hier wird deutlich, dass eine Degradation der Perowskitstruktur der erfindungsgemäßen Oxidkeramik nicht auftritt, sodass eine Veränderung, beispielsweise eine Abnahme des Transports von Sauerstoffionen durch eine daraus hergestellte Membran nicht zu erwarten ist.

### Beispiel 5: Herstellung von Membranen aus erfindungsgemäßer Oxidkeramik

Erfindungsgemäß zusammengesetztes Perowskit kann durch eines der beschriebenen Herstellungsverfahren mit einer Partikelgröße von etwa 1 µm hergestellt werden. Tabletten, Monolithen, Kapillaren oder Fasern lassen sich durch Formgebung, beispielsweise durch Pressen oder Spinnen herstellen. Zum Verspinnen wird Perowskit in einem Masseanteil von 65% mit einem organischen Verarbeitungsmittel, beispielsweise Carbowax, zu einer plastisch verformbaren Masse formuliert, die versponnen werden kann. Es wurden Fasern mit einem Außendurchmesser von 0,8 mm, einem Innendurchmesser von 0,6 mm bei einer Wanddicke von 100 µm hergestellt.

Für den Fall der Herstellung bestimmter Membranformen durch Extrusion wird erfindungsgemäßes Perowskit zu einem Masseanteil von 75% mit einem organischen Verarbeitungsmittel zu einer plastisch verformbaren Masse formuliert. Bei der Herstellung einer Kapillare durch Extrusion betrug der Außendurchmesser 3 mm, der Innendurchmesser 2,2 mm mit einer Wanddicke von 0,4 mm.

Die so hergestellten Fasern und Kapillaren wurden durch Glühen in Luft bei ca. 1210 °C zu einem dichten Feststoff gesintert, der für Sauerstoffionen permeabel ist. Der Fremdgasfluß, der für Stickstoff bestimmt wurde, beträgt weniger als 10⁻³ mL /cm² Membranfläche und Minute.

Für Fasern, die durch das Spinnverfahren hergestellt wurden, wurde für eine Wandstärke von 120 µm bei 920 °C ein Sauerstofffluß von 4,5 mL / min und cm² Faseroberfläche bestimmt.

Durch Extrusion hergestellte Kapillaren mit einer Wandstärke von 300 µm zeigten einen Sauerstofffluß bei 920 °C von ca. 2,0 mL /(min cm²). Der Anteil von Stickstoff im Permeat lag unterhalb von 0,001 (1 Promille). Für diese Messung wurde Sauerstoff auf der Permeatseite mit Kohlendioxid als Kreislaufgas aus dem Permeatraum entfernt, sodass der Sauerstoff-Partialdruck im Permeatraum sehr niedrig halten werden konnte. Zur Abtrennung des Sauerstoffs aus dem Kohlendioxid wurde das Gemisch unter gleichzeitiger Kompression auf 50 bar auf 0 °C gekühlt. Bei diesen Bedingungen verflüssigt sich das Kohlendioxid und läßt sich vom gasförmigen Sauerstoff abtrennen. Kohlendioxid läßt sich in den Kreislauf zurückführen. Alternativ dazu kann der Sauerstoff auch durch Pumpen aus dem Permeatraum entfernt werden.

### Beispiel 6: Partialoxidation von Kohlenwasserstoff

Als Beispiel für die Partialoxidation eines Kohlenwasserstoffs wird die Herstellung von Synthesegas aus Methan gezeigt, bei der der Sauerstoff zur Oxidation aus Luft abgetrennt wird und durch die erfindungsgemäße Oxidkeramik in Membranform hindurch auf die Permeatseite tritt, an welcher die Oxidation des Kohlenwasserstoffs abläuft. Die erfindungsgemäße Membran kann in Form von Kapillaren, Fasern, Platten oder Monolithen in einen Membranreaktor eingebracht werden. Die entsprechende Umsetzung von Erdgas zu sogenanntem Synthesegas verläuft nach der Gleichung CH₄ + ½ O₂→ CO + 2H₂.

Für die technische Durchführung der Partialoxidation von Erdgas zu Synthesegas ist die mechanische Stabilität der Membran in der reduzierenden Methan-Atmosphäre mit geringem Sauerstoff-Partialdruck (10⁻¹⁷ bar) bei gleichzeitig hohem Sauerstofffluß durch die Membran eine wichtige Eigenschaft. Zur Bestimmung der anwendungstechnischen Eigenschaften wurde eine Membran aus erfindungsgemäßem Perowskitmaterial, erhältlich nach Beispiel 1, in Form einer Membran in einem Membranreaktor für die Partialoxidation von Methan eingesetzt. Die Membran hatte eine Dicke von 1,25 mm. Im Anschluss an eine Konditionierungsphase von etwa 2 Stunden in Luft wurde die Partialoxidation von Methan durchgeführt, wobei auf der Permeatseite ein Nickel-basierter Katalysator vorhanden war. Die Reaktionsbedingungen waren ein Spülgasfluß von 5 mL/min Methan, 4,5 mL/min Helium, 0,5 mL/min Neon, auf der Luftseite ein Luftfluß von 150 mL/min bei 900 °C.

Nach der Konditionierungsphase zeigte die erfindungsgemäße Membran in Verbindung mit dem Nickel-basierten Katalysator eine CO-Selektivität von 98,3%. Nach einer Reaktionszeit von 48 h erreichte der Methanumsatz 60%, das H₂/CO-Verhältnis betrug 1,75 und der Sauerstofffluß durch die Membran betrug 2,55 mL/min/cm². Die Messwerte sind in Figur 6 dargestellt, in der die rechte Ordinate den Sauerstofffluß angibt, die linke Ordinate die CO-Selektivität, den Methanumsatz und die CO₂-Selektivität.

Diese Ergebnisse belegen, dass das erfindungsgemäße Perowskitmaterial auch unter den stark reduzierenden Bedingungen der Partialoxidation von Methan in Verbindung mit einem hohen Sauerstofffluß eine sehr gute mechanische Stabilität zeigt.

In gleicher Weise können höhere Kohlenwasserstoffe, beispielsweise Flüssiggasmischungen mit C₂ bis C₄, die häufig als Abfall abgefackelt werden, in Synthesegas überführt werden.

Alternativ kann auch ein gesättigter Kohlenwasserstoff durch oxidative Dehydrierung in einen ungesättigten überführt werden, beispielsweise Ethan zu Ethylen nach der Gleichung C₂H₆ + ½O₂→ C₂H₄ + H₂O. Für die oxidative Dehydrierung von Ethan zu Ethylen wurden bei 650 °C Selektivitäten für Ethylen von 90%, bei 800 °C von 85% gefunden. Bei einer Temperatur von 800 °C betrug die Ausbeute von Ethylen 68%.

Weiterhin kann Erdgas durch oxidative Kopplung nach der Gleichung 2CH₄ + ½O₂→C₂H₄ + H₂O zu höheren Kohlenwasserstoffen umgesetzt werden. Für die oxidative Kopplung von Methan konnte bei einer Reaktionstemperatur von 800 °C eine Selektivität für C₂₊ von ca. 70%, bei 900 °C eine Selektivität für C₂₊ von ca. 50% bestimmt werden. Die höchsten bestimmten Ausbeuten an C₂₊ betrugen ca. 30%.

Für die Umsetzung von Methan zu Synthesegas werden vorzugsweise steam-reforming-Katalysatoren auf der Basis von Li- und La- dotierten Nickel auf Aluminiumoxid eingesetzt, mit denen ein Methanumsatz von 97% bei einer Selektivität für CO von 98 % zu erreichen ist. Alternativ können Katalysatoren auf Basis von Edelmetallen eingesetzt werden, z.B. Pt und/oder Ru auf Aluminiumoxid- oder Titandioxidträgern.

### Beispiel 7: Oxidation von Kohlenwasserstoffgas mit Sauerstoff aus Wasser.

Zur Oxidation von Kohlenwasserstoff kann Sauerstoff aus sauerstoffhaltigen gasförmigen Verbindungen mit Hilfe der erfindungsgemäßen Keramikmembran abgetrennt werden. Als sauerstoffhaltige gasförmige Verbindungen eignen sich bei den Betriebstemperaturen dieser Oxidkeramik neben Luft auch Wasser und/oder Schwefeldioxid und/oder Stickstoffoxide. Die sauerstoffhaltige Verbindung wird hier durch Wasser dargestellt, das auf der einen (Luft-) Seite der erfindungsgemäßen Oxidkeramikmembran vorliegt. Bei Betriebstemperaturen von oberhalb 900 °C findet eine merkliche Zersetzung des Wassers nach der Gleichung H₂O → H₂ + ½ O₂ statt, dabei beträgt der Partialdruck des Wasserstoffs ca. 2 x 10⁻³ bar, der des Sauerstoffs ca. 10⁻³ bar.

Die gegenüberliegende Seite der Membran ist die Permeatseite, an der Kohlenwasserstoff vorliegt, beispielsweise Methan. Methan wird zu Synthesegas umgesetzt und reduziert dabei den Partialdruck des Sauerstoffs auf der Permeatseite der Membran, die an den Reaktionsraum dieser Oxidationsreaktion angrenzt, auf etwa 10⁻¹⁸ bar. Auf diese Weise wird ein Gradient des Sauerstoff-Partialdrucks zwischen der Luftseite, die das sauerstoffhaltige Gas kontaktiert, und der Permeatseite der Membran von etwa 10⁻¹⁵ bar erzielt, was ausreicht, um die Zersetzung des Wassers als Lieferant des Sauerstoffs für die Oxidationsreaktion des Kohlenwasserstoffs derart zu beschleunigen, dass der entstehende Sauerstoff kontinuierlich durch die Membran permeiert und auf der Reaktions- und Permeatseite das Methan zu Synthesegas oxidiert. Auf der Luftseite der Membran, die vom sauerstoffhaltigen Gas kontaktiert wird, bleibt in Mischung mit gasförmigem Wasser Wasserstoffgas zurück, das eine ausreichend hohe Qualität zum Betreiben von Brennstoffzellen aufweisen kann.

### Beispiel 8: Oxidation von Kohlenwasserstoffbei gleichzeitiger Gewinnung elektrischer Energie

Zur Trennung der Leitung von Elektronen von der Leitung von Sauerstoffanionen innerhalb des erfindungsgemäßen Membranmaterials wird erfindungsgemäße Oxidkeramik als Dünnschicht (50 µm) auf Yttrium-stabilisiertes Zirkoniumoxid mit einer Schichtdicke von 300 µm beidseitig aufgetragen. Das Yttrium-stabilisierte Zirkoniumoxid ist für Sauerstoffanionen leitfähig, jedoch nicht für Elektronen. Die beiden auf gegenüberliegenden Oberflächen der YSZ-Schicht aufgebrachten Schichten aus erfindungsgemäßer Oxidkeramik werden elektrisch kontaktiert.

Die eine Seite dieser dreischichtigen Membran wird von Luft als sauerstoffhaltigem Gas angeströmt, die gegenüberliegende Permeatseite der dreischichtigen Membran von einem Kohlenwasserstoff, beispielsweise Methan. Dabei wird Methan zu Synthesegas oxidiert. Der für diese Oxidation erforderliche Sauerstoff wird aus der Luft abgetrennt, wandert in Form von Sauerstoffanionen durch die dreischichtige Membran und bildet ein elektrisches Potential. Durch die Kontaktierung der beiden gegenüberliegenden Schichten aus erfindungsgemäßem Perowskitmaterial findet ein Ladungsausgleich statt, wobei die entstehende Elektroenergie genutzt werden kann.

### Beispiel 9: Herstellung flüssiger Kohlenwasserstoffe unter Verwendunix der erfindungsgemäßen Oxidkeramik.

Gemäß Beispiel 6 durch Partialoxidation von Methan mit aus der Luft abgetrenntem Sauerstoff erzeugtes Synthesegas wird katalytisch unter Verwendung der erfindungsgemäßen Oxidkeramik, zum Beispiel durch oxidative Kopplung, zu flüssigen Energieträgern, beispielsweise Methanol oder schwefelfreien flüssigen Kohlenwasserstoffen wie Benzin oder Diesel umgesetzt. Solcher Dieselkraftstoff ist sehr hochwertig, da er Cetanzahlen größer 70 aufweist, zu 99% aus Paraffinen besteht, an Aromaten arm ist und mit Schwefel unter 1 ppm als schwefelfrei gelten kann.

In einem weiteren Verfahren kann das in den Beispielen hergestellte Synthesegas ideal als Brennstoff in Brennstoffzellen umgesetzt werden, die in einem Temperaturbereich von 650 °C bis 950 °C oder darüber mit erfindungsgemäßer Oxidkeramik im dreischichtigen Aufbau mit elektrisch isolierenden Zwischenschicht gemäß Beispiel 8 arbeiten. Dabei bietet das Synthesegas den Vorteil, dass Abscheidungen von Kohlenstoff an der Anode einer solchen Brennstoffzelle vermieden werden, die beispielsweise bei Verwendung von Methan oder längerkettigen Kohlenwasserstoffen auftreten.

## Patentansprüche

1. Oxidkeramik mit der Eigenschaft der Leitung von Sauerstoffionen und Elektronen und mit Perowskitstruktur ABO₃, **dadurch gekennzeichnet, dass** die B-Position teilweise durch zweiwertige Kationen mit konstanter Oxidationsstufe ersetzt sind und **dadurch**, dass kein Kobalt enthalten ist.

2. Oxidkeramik nach Anspruch 1, **dadurch gekennzeichnet, dass** das zweiwertige Kation ausgewählt ist unter Sn²⁺, Ni²⁺, Cu²⁺, Cd²⁺ , Pd²⁺, Zn²⁺ und Mischungen dieser.

3. Oxidkeramik nach einem der vorangehenden Ansprüche, **dadurch gekennzeichnet, dass** das zweiwertige Kation in einem Anteil von 10 bis 90% die B-Positionen besetzt.

4. Oxidkeramik nach einem der vorangehenden Ansprüche, **dadurch gekennzeichnet, dass** der verbleibende Teil der B-Positionen durch Fe³⁺ , Fe⁴⁺, Ti³⁺, Ti⁴⁺, Ce³⁺, Ce⁴⁺, Mn³⁺, Mn⁴⁺, Nd³⁺, Nd⁴⁺, Gd³⁺, Gd⁴⁺, Sm³⁺, Sm⁴⁺, Dy³⁺, Dy⁴⁺ und/oder Mischungen dieser besetzt ist.

5. Oxidkeramik nach einem der vorangehenden Ansprüche, **dadurch gekennzeichnet, dass** die A-Plätze durch Kationen der zweiten Hauptgruppe und/oder der Lanthaniden-Gruppe oder Mischungen dieser besetzt sind.

6. Oxidkeramik nach einem der vorangehenden Ansprüche, mit der Zusammensetzung Ba_{0,4-0,6}Sr_{0,4-0,6}Fe_{0,7-0,9}Zn_{0,1-0,3}O₃-_{δ}.

7. Oxidkeramik nach einem der vorangehenden Ansprüche, mit der Zusammensetzung Ba_{0,5}Sr_{0,5}Fe_{0,8}Zn_{0,2}O₃-_{δ}.

8. Membran zur Verwendung bei hoher Temperatur, **gekennzeichnet durch** einen Gehalt an Oxidkeramik nach einem der vorangehenden Ansprüche.

9. Membran zur Erzeugung einer elektrischen Spannung, **gekennzeichnet durch** zwei Schichten aus Oxidkeramik nach einem der Ansprüche 1 bis 8, mit einer dazwischen liegenden Schicht zur elektrischen Isolation und zur Leitung von Sauerstoffionen.

10. Membran nach Anspruch 9, **dadurch gekennzeichnet, dass** die dazwischen liegende Schicht zur elektrischen Isolation und zur Leitung von Sauerstoffionen Yttriumstabiliertes Zirkoniumoxid aufweist.

11. Verfahren zur Herstellung einer Oxidkeramik, **dadurch gekennzeichnet, dass** die Oxidkeramik durch einen der Ansprüche 1 bis 7 definiert ist.

12. Verfahren zur Oxidation von Kohlenwasserstoffen, **gekennzeichnet durch** die Verwendung einer Membran nach einem der Ansprüche 8 bis 10.

13. Verfahren zur Abtrennung von Sauerstoff aus sauerstoffhaltigen Gasen bei hoher Temperatur, **gekennzeichnet durch** Verwendung einer Oxidkeramik nach einem der Ansprüche 1 bis 7 oder einer Membran nach einem der Ansprüche 8 bis 10.

14. Verfahren zur Erzeugung einer elektrischen Spannung, **gekennzeichnet durch** Verwendung einer Membran nach einem der Ansprüche 8 bis 9.

15. Chemischer Reaktor, **gekennzeichnet durch** Verwendung einer Oxidkeramik nach einem Ansprüche 1 bis 7 oder einer Membran nach einem der Ansprüche 8 bis 10.

16. Brennstoffzelle zur Erzeugung elektrischen Stroms, **gekennzeichnet durch** eine Membran nach einem der Ansprüche 9 oder 10.
